# EUROPEAN PATENT SPECIFICATION

(11) **EP 1 882 016 B1**
(45) Date of publication and mention of the grant of the patent: **03.02.2016**
(21) Application number: 06763192.9
(22) Date of filing: 19.05.2006
(51) Int. Cl.: C08L 25/06, C08F 12/08, C08L 91/00, C08F 2/02, C08F 2/44

(54) **POLYSTERENE COMPOSITION COMPRISING A FISCHER TROPSCH DERIVED WHITE OIL**
POLYSTYROLZUSAMMENSETZUNG MIT EINEM DURCH DAS FISCHER-TROPSCH-VERFAHREN GEWONNENEM WEISSÖL
COMPOSITION DE POLYSTERENE ET D'HUILE BLANCHE OBTENUE PAR PROCEDE FISCHER-TROPSCH

(30) Priority: 20.05.2005 EP 05011023
(43) Date of publication of application: 30.01.2008
(73) Proprietor: Shell Internationale Research Maatschappij B.V., 2596 HR Den Haag (NL)
(72) Inventor: NULL, Volker Klaus, 21107 Hamburg (DE)
(74) Representative: Matthezing, Robert Maarten
(86) International application number: PCT/EP2006/062454
(87) International publication number: WO 2006/122978

(56) References cited:
- EP-A- 1 382 639
- WO-A-01/94466
- WO-A-02/070627
- US-A- 3 100 195

## Description

The present invention is directed to a polystyrene composition comprising a medicinal or technical white oil as plasticizer.

Such a composition is described in US-A-2 619 478 as published in 1952. This publication describes a molding composition comprising of a thermoplastic polystyrene resin and a minor amount of a mineral oil for increasing the rate of flow of the resin during molding and facilitating removal of the molded products from molds in which they are formed. The mineral oils exemplified in this publication are substantially free of unsaturated compounds, or aromatic radicals, non-volatile at room conditions and at usual molding conditions. They boil at a temperature of 200 °C or higher at 760 mmHg. The illustrated mineral oils had a kinematic viscosity at 40 °C of about 10-44 mm²/sec.

At least since 1952 mineral oils have been used in polystyrene compositions as plasticizers. Examples of a more recent publication which mention mineral white oils as plasticizers in polystyrene compositions is for example EP-A-634 444 as published in 1995.

If the polystyrene composition is to be used in food applications, for example coffee cups or food packaging, more stringent property requirements for the white oil plasticizer exist. According to EU Directive 90/128/EEC based on the recommendation of the Scientific Committee for Food (SCF) of the European Commission and on the results of oral feeding studies carried out at the request of SCF by CONCAWE specifications for such oil have been set. The medicinal white oil must contain not more than 5% (w/w) mineral hydrocarbons with carbon numbers less than 25, have a kinematic viscosity at 100 °C not less than 8.5 mm²/s, and an average molecular weight of not less than 480 g/mol. The properties of a medicinal white oil are described by the following standards:
- European Pharmacopeia 3^{rd} Edition;
- US Pharmacopeia 23^{rd} edition;
- US FDA specification CFR §172.927 for "direct" food use;
- US FDA specification CFR §178.3620(a) for "indirect" food contact.

A polystyrene composition comprising a Fischer-Tropsch derived white oil meeting the above mentioned requirements of EU Directive 90/128/EEC has been described in EP-A-1 382 639.

A problem of the above polystyrene compositions composing a white oil having a relatively high kinematic viscosity as described in EP-A-1 382 639 is that they tend to result in fogging, as a result of which the polystyrene becomes turbid and hence visibly less attractive. It goes without saying that this is not desirable, in particular if the polystyrene compositions are used in e.g. food packages or other non-pigmented applications. The above problem becomes even more pertinent if the polystyrene contains more than 3 wt% of the white oil, or if a white oil of a viscosity at 100 °C of above 7 mm²/s is applied as plasticizer.

It is an object of the present invention to avoid or at least minimize the above problem. It is a further object of the present invention to provide an alternative plasticizer for use in a polystyrene composition.

One or more of the above or other objects are achieved according to the present invention by providing a polystyrene composition or styrene copolymers composition comprising a Fischer-Tropsch derived white oil, wherein the Fischer-Tropsch derived white oil has a kinematic viscosity at 100 °C of in between more than 2 mm²/s and less than 7 mm²/s, as determined according to ISO 3014 and wherein the composition comprises from 1 to 3 wt% of the Fischer-Tropsch derived white oil.

Surprisingly, the compositions according to the present invention show an improved fogging behaviour, i.e. the polystyrene compositions are less inclined to turn turbid, while at the same time the white oils as used in the compositions according to the present invention have a content of mineral hydrocarbons with carbon numbers less than 25 of below 5% (w/w) as required by EU Directive 90/128/EEC.

Further, the use of Fischer-Tropsch derived white oils is advantageous because they are more easily obtainable than medicinal white oils derived from mineral oils. A further advantage is that the contents of sulphur and nitrogen are nearly zero, due to the nature of the Fischer-Tropsch process.

An additional advantage is that the pour point of the Fischer-Tropsch derived oils is typically lower than the pour point of mineral oil derived white oils of comparable viscosity. This is advantageous because handling of the plasticizer oil, in particular at low temperature conditions will become less cumbersome for the polystyrene manufacturer, while also blending operations can be less cumbersome.

The polystyrene composition according to the present invention comprises, other than the Fischer-Tropsch derived white oil plasticizer, a (co)polymeric composition containing a polymer based on vinyl aromatic monomers, such as styrene monomer. The polystyrene composition is suitably a so-called clear polystyrene molding material. This composition is well known and is for example described in more detail in Ullmann's Encyclopedia of Industrial Chemistry, 5th completely revised ed. VCH New York, Vol. A21, pages 616-633.

The polystyrene composition according to the present invention contains a (co)polymer containing styrene monomers, otherwise also known as thermoplastic vinyl aromatic resin. Such thermoplastic vinyl aromatic resins include polystyrene, the polymers of para-methylstyrene, meta-ethylstyrene, ortho-chlorostyrene, para-isopropylstyrene, para-chlorostyrene, ortho, para-dimethylstyrene, and resinous copolymers of any of the corresponding monovinyl aromatic compounds, or styrene, with other polymerizable unsaturated organic compounds containing an ethylenic group such as vinyl chloride, ethyl acrylate, methyl methacrylate, acrylonitrile, alpha-methylstyrene, alpha-ethylstyrene or para-methyl-alpha-methylstyrene. The compositions according to the invention more preferably pertain to molding compositions comprising polystyrene as the vinyl aromatic resin component.

The person skilled in the art will readily understand what is meant by "white oil", or more specifically "medicinal white oil". The white oil may be any type of Fischer-Tropsch derived white oil having a kinematic viscosity at 100 °C of more than 2 mm²/s, and less than 7 mm²/s. It preferably fulfils the requirements for medicinal white oils. General examples of white oils are for instance described in the above referenced EP-A-1 382 639 and in General Textbook "Lubricant Base Oil and Wax Processing", Avilino Sequeira, Jr, Marcel Dekker Inc., New York, 1994, Chapter 6, pages 141-145.

Preferably, the Fischer-Tropsch derived white oil has a kinematic viscosity at 100 °C of less than 6.5 mm²/s, preferably less than 6.0 mm²/s, more preferably less than 5.5 mm²/s, even more preferably less than 5.0 mm²/s, yet more preferably of less than 4.5 mm²/s, as determined according to ISO 3014. Preferably, the Fischer-Tropsch derived white oil has a kinematic viscosity at 100 °C of and above 2.0 mm²/s, preferably above 2.25 mm²/s, more preferably above 2.4 mm²/s, even more preferably above 2.5 mm²/s, yet more preferably above 3 mm²/s as determined according to ISO 3014. It has been found that if a white oil with a viscosity of 2 mm²/s or below is employed, it will be difficult to incorporate into the polymer, since it will result in a shear reduction, which requires longer process times, which may eventually lead to degradation of the polymer composition obtained due to the longer process times at higher effective shear rates throughout the process.

For food applications the Fischer-Tropsch derived white oil preferably has a content of mineral hydrocarbons with carbon numbers less than 25 of not more than 5% (w/w) and a 5 wt% recovery boiling point of above 391 °C according to ASTM D 2887.

Preferably, the Fischer-Tropsch derived white oil preferably has a content of mineral hydrocarbons with carbon numbers less than 25 of not more than 5% (w/w), preferably below 3% (w/w), more preferably below 1% (w/w). Further, the Fischer-Tropsch derived white oil preferably has 5 wt% recovery boiling point of above 400 °C. The Fischer-Tropsch derived oil preferably has a Saybolt colour of greater than +25 and preferably equal to +30. The content of polar compounds is preferably less than 1 wt% and the content of non-cyclic isoparaffins is preferably between 75 and 98 wt%. The ultra violet (UV) adsorption spectra values as measured according to ASTM D 2269 is preferably less than 0.70 in the 280-289 nm spectral band, less than 0.60 in the 290-299 nm spectral band, less than 0.40 in the 300-329 nm spectral band and less than 0.09 in the 330-380 nm spectral band as according to FDA 178.3620 (c). The pour point of the oil is preferably below -10 °C and more preferably below -15 °C. The CN number as measured according to IEC 590 is preferably between 15 and 30.

The content of Fischer-Tropsch white oil as plasticizer in the polystyrene composition ranges from 1 to 3 wt%. The exact amount of the Fischer-Tropsch derived white oil depends on the desired properties of the composition, as well as on the viscosity of the Fischer-Tropsch derived white oil and the molecular weight and composition of the polystyrene or styrene copolymer.

Further it is preferred according to the present invention that the Fischer-Tropsch white oil has a kinematic viscosity at 40 °C of less than 55 mm²/s, preferably less than 45 mm²/s, more preferably less than 40 mm²/s, even more preferably less than 35 mm²/s, most preferably less than 30 mm²/s according to ISO 3014.

Further, the Fischer-Tropsch white oil preferably has a flash point below 270 °C, preferably below 260 °C, more preferably below 250 °C, and above 220 °C, preferably above 225 °C, more preferably above 230 °C according to ISO 2592.

The Fischer-Tropsch derived white oil according to the present invention is preferably obtained by the following process. The preferred process comprises (1) a Fischer-Tropsch synthesis step, (2) a hydrocracking/ hydroisomerisation step on (part of) the Fischer-Tropsch synthesis product followed by (3) a pour point reducing step of (a fraction of) the product of the hydroprocessing step. Either solvent or catalytic dewaxing may achieve reduction of pour point in step (3). The desired medicinal or technical white oil having the desired viscosity can be isolated from said dewaxed product by means of distillation. Optionally the oil is hydrofinished or subjected to an adsorption treatment in order to improve its colour. Examples of these process steps are illustrated for the below preferred embodiment.

The thus obtained Fischer-Tropsch derived white oil is then blended in an additional step (e) with the polystyrene or styrene-copolymer polymer.

The Fischer-Tropsch synthesis step may be performed according to the so-called commercial Sasol process, the commercial Shell Middle Distillate Process or by the non-commercial Exxon process. These and other processes are for example described in more detail in EP-A-776 959, EP-A-668 342, US-A-4 943 672, US-A-5 059 299, WO-A-9 934 917 and WO-A-99/20720. Most of these publications also describe the above-mentioned hydroisomerisation/ hydrocracking step (2).

A preferred process in which high yields of medicinal or technical white oils having a vK@100 of less than 7 mm²/s, can be obtained is by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to white oil precursor fraction obtained in step (b); and
(d) isolating the white oil by distilling the product of step (c).

Accordingly, the compositions according to the present invention may be obtained by a process comprising preparing a Fischer-Tropsch derived white oil by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to the white oil precursor fraction obtained in step (b); and
(d) isolating the white oil by distilling the product of step (c); and
(e) blending the white oil obtained in step (d) with the polystyrene or styrene copolymer.

The relatively heavy Fischer-Tropsch derived feed as used in step (a) has at least 30 wt%, preferably at least 50 wt%, and more preferably at least 55 wt% of compounds having at least 30 carbon atoms. Furthermore the weight ratio of compounds having at least 60 or more carbon atoms and compounds having at least 30 carbon atoms of the Fischer-Tropsch derived feed is at least 0.2, preferably at least 0.4 and more preferably at least 0.55. The Fischer-Tropsch derived feed is preferably derived from a Fischer-Tropsch product which comprises a C₂₀+ fraction having an ASF-alpha value (Anderson-Schulz-Flory chain growth factor) of at least 0.925, preferably at least 0.935, more preferably at least 0.945, even more preferably at least 0.955.

The initial boiling point of the Fischer-Tropsch derived feed may range up to 400 °C, but is preferably below 200 °C. Preferably at least any compounds having 4 or less carbon atoms and any compounds having a boiling point in that range are separated from a Fischer-Tropsch synthesis product before the Fischer-Tropsch synthesis product is used as a Fischer-Tropsch derived feed in step (a). The Fischer-Tropsch derived feed as described in detail above will for the greater part comprise of a Fischer-Tropsch synthesis product, which has not been subjected to a hydroconversion step as defined according to the present invention. In addition to this Fischer-Tropsch product also other fractions may be part of the Fischer-Tropsch derived feed. Possible other fractions may suitably be any high boiling fraction obtained in step (b).

Such a Fischer-Tropsch derived feed is suitably obtained by a Fischer-Tropsch process, which yields a relatively heavy Fischer-Tropsch product. Not all Fischer-Tropsch processes yield such a heavy product. An example of a suitable Fischer-Tropsch process is described in WO-A-99/34917. This process may yield a Fischer-Tropsch product as described above.

The Fischer-Tropsch derived feed and the resulting waxy raffinate product will contain no or very little sulphur and nitrogen containing compounds. This is typical for a product derived from a Fischer-Tropsch reaction, which uses synthesis gas containing almost no impurities. Sulphur and nitrogen levels will generally be below the detection limits, which are currently 5 ppm for sulphur and 1 ppm for nitrogen.

The hydrocracking/hydroisomerisation reaction of step (a) is preferably performed in the presence of hydrogen and a catalyst, which catalyst can be chosen from those known to one skilled in the art as being suitable for this reaction. Catalysts for use in step (a) typically comprise an acidic functionality and a hydrogenation/dehydrogenation functionality. Preferred acidic functionalities are refractory metal oxide carriers. Suitable carrier materials include silica, alumina, silica-alumina, zirconia, titania and mixtures thereof. Preferred carrier materials for inclusion in the catalyst for use in the process of this invention are silica, alumina and silica-alumina. A particularly preferred catalyst comprises platinum supported on a silica-alumina carrier. If desired, the acidity of the catalyst carrier may be enhanced by applying a halogen moiety, in particular fluorine, or a phosphorous moiety to the carrier. Examples of suitable hydrocracking/hydroisomerisation processes and suitable catalysts are described in WO-A-00/14179, EP-A-532 118 and the earlier referred to EP-A-776 959.

Preferred hydrogenation/dehydrogenation functionalities are Group VIII metals, such as nickel, cobalt, iron, palladium and platinum. Preferred are the noble metal Group VIII members, palladium and more preferred platinum. The catalyst may comprise the more preferred noble metal hydrogenation/dehydrogenation active component in an amount of from 0.005 to 5 parts by weight, preferably from 0.02 to 2 parts by weight, per 100 parts by weight of carrier material. A particularly preferred catalyst for use in the hydroconversion stage comprises platinum in an amount in the range of from 0.05 to 2 parts by weight, more preferably from 0.1 to 1 parts by weight, per 100 parts by weight of carrier material. The catalyst may also comprise a binder to enhance the strength of the catalyst. The binder can be non-acidic. Examples are clays and other binders known to one skilled in the art.

In step (a) the feed is contacted with hydrogen in the presence of the catalyst at elevated temperature and pressure. The temperatures typically will be in the range of from 175 to 380 °C, preferably higher than 250 °C and more preferably from 300 to 370 °C. The pressure will typically be in the range of from 10 to 250 bar and preferably between 20 and 80 bar. Hydrogen may be supplied at a gas hourly space velocity of from 100 to 10000 Nl/l/hr, preferably from 500 to 5000 Nl/l/hr. The hydrocarbon feed may be provided at a weight hourly space velocity of from 0.1 to 5 kg/l/hr, preferably higher than 0.5-kg/l/hr and more preferably lower than 2 kg/l/hr. The ratio of hydrogen to hydrocarbon feed may range from 100 to 5000 Nl/kg and is preferably from 250 to 2500 Nl/kg.

The conversion in step (a) as defined as the weight percentage of the feed boiling above 370 °C which reacts per pass to a fraction boiling below 370 °C, is at least 20 wt%, preferably at least 25 wt%, but preferably not more than 80 wt%, more preferably not more than 65 wt%. The feed as used above in the definition is the total hydrocarbon feed fed to step (a), thus also including any optional recycle of the higher boiling fraction as obtained in step (b).

In step (b) the product of step (a) is preferably separated into one or more distillate fractions, a white oil precursor fraction having preferably a T10wt% boiling point of between 300 and 450 °C. A heavy fraction may be separated from the product of step (a) to adjust the resultant viscosity of the medicinal or technical white oil. If no heavy fraction is removed the kinematic viscosity at 100 °C of the white oil may be well above 15 mm²/sec. By adjusting the amount and cut point at which the said heavy fraction is separated from the effluent of step (a) medicinal white oils or technical white oils can be obtained having a kinematic viscosity at 100 °C ranging from above 2 mm²/s to less than 7 mm²/s, and preferably from 2.5 mm²/s to 5.5 mm²/s.

If a heavy fraction is separated then the T90wt% boiling point of the white oil precursor fraction will preferably be between 350 and 550 °C. The separation is preferably performed by means of a first distillation at about atmospheric conditions, preferably at a pressure of between 1.2-2 bara, wherein the gas oil product and lower boiling fractions, such as naphtha and kerosine fractions, are separated from the higher boiling fraction of the product of step (a). If a high boiling fraction is removed from the product of step (a) as described above, then this higher boiling fraction, of which suitably at least 95 wt% boils above 370 °C, is further separated in a vacuum distillation step wherein a vacuum gas oil fraction, the white oil precursor fraction and the optional higher boiling fraction are obtained. The vacuum distillation is suitably performed at a pressure of between 0.001 and 0.1 bara.

In step (c) the white oil precursor fraction obtained in step (b) is subjected to a pour point reducing treatment. With a pour point reducing treatment is understood every process wherein the pour point of the base oil is reduced by more than 10 °C, preferably more than 20 °C, more preferably more than 25 °C. The pour point reducing treatment is preferably performed by means of a so-called catalytic dewaxing process.

The catalytic dewaxing process can be performed by any process wherein in the presence of a catalyst and hydrogen the pour point of the white oil precursor fraction is reduced as specified above. Suitable dewaxing catalysts are heterogeneous catalysts comprising a molecular sieve and optionally in combination with a metal having a hydrogenation function, such as the Group VIII metals. Molecular sieves, and more suitably intermediate pore size zeolites, have shown a good catalytic ability to reduce the pour point of the white oil precursor fraction under catalytic dewaxing conditions. Preferably the intermediate pore size zeolites have a pore diameter of between 0.35 and 0.8 nm. Suitable intermediate pore size zeolites are mordenite, ZSM-5, ZSM-12, ZSM-22, ZSM-23, SSZ-32, ZSM-35 and ZSM-48. Another preferred group of molecular sieves are the silica-aluminaphosphate (SAPO) materials of which SAPO-11 is most preferred as for example described in US-A-4 859 311. ZSM-5 may optionally be used in its HZSM-5 form in the absence of any Group VIII metal. The other molecular sieves are preferably used in combination with an added Group VIII metal. Suitable Group VIII metals are nickel, cobalt, platinum and palladium. Examples of possible combinations are Ni/ZSM-5, Pt/ZSM-23, Pd/ZSM-23, Pt/ZSM-48 and Pt/SAPO-11. Further details and examples of suitable molecular sieves and dewaxing conditions are for example described in WO-A-97/18278, US-A-5 053 373, US-A-5 252 527 and US-A-4 574 043.

The dewaxing catalyst suitably also comprises a binder. The binder can be a synthetic or naturally occurring (inorganic) substance, for example clay, silica and/or metal oxides. Natural occurring clays are for example of the montmorillonite and kaolin families. The binder is preferably a porous binder material, for example a refractory oxide of which examples are: alumina, silica-alumina, silica-magnesia, silica-zirconia, silica-thoria, silica-beryllia, silica-titania as well as ternary compositions for example silica-alumina-thoria, silica-alumina-zirconia, silica-alumina-magnesia and silica-magnesia-zirconia. More preferably a low acidity refractory oxide binder material which is essentially free of alumina is used. Examples of these binder materials are silica, zirconia, titanium dioxide, germanium dioxide, boria and mixtures of two or more of these of which examples are listed above. The most preferred binder is silica.

A preferred class of dewaxing catalysts comprise intermediate zeolite crystallites as described above and a low acidity refractory oxide binder material which is essentially free of alumina as described above, wherein the surface of the aluminosilicate zeolite crystallites has been modified by subjecting the aluminosilicate zeolite crystallites to a surface dealumination treatment. A preferred dealumination treatment is by contacting an extrudate of the binder and the zeolite with an aqueous solution of a fluorosilicate salt as described in for example US-A-5 157 191 or WO-A-00/29511. Examples of suitable dewaxing catalysts as described above are silica bound and dealuminated Pt/ZSM-5, silica bound and dealuminated Pt/ZSM-23, silica bound and dealuminated Pt/ZSM-12, silica bound and dealuminated Pt/ZSM-22, as for example described in WO-A-00/29511 and EP-B-832 171.

Catalytic dewaxing conditions are known in the art and typically involve operating temperatures in the range of from 200 to 500 °C, suitably from 250 to 400 °C, hydrogen pressures in the range of from 10 to 200 bar, preferably from 40 to 70 bar, weight hourly space velocities (WHSV) in the range of from 0.1 to 10 kg of oil per litre of catalyst per hour (kg/l/hr), suitably from 0.2 to 5 kg/l/hr, more suitably from 0.5 to 3 kg/l/hr and hydrogen to oil ratios in the range of from 100 to 2,000 litres of hydrogen per litre of oil. By varying the temperature between 315 and 375 °C at between 40-70 bars, in the catalytic dewaxing step it is possible to prepare base oils having different pour point specifications varying from suitably -10 to -60 °C.

In step (d) the dewaxed effluent of step (c), optionally after flashing off some low boiling compounds, is separated into one or more low viscosity base oil products and the white oil.

In order to improve the colour properties of this white oil fraction as obtained above a final finishing treatment may be performed. Examples of suitable finishing treatments are so-called sulfuric acid treating processes, hydrofinishing processes and adsorption processes. Sulfuric acid treating is for example described in General Textbook "Lubricant Base Oil and Wax Processing", Avilino Sequeira, Jr, Marcel Dekker Inc., New York, 1994, Chapter 6, pages 226-227.

Hydrofinishing is suitably carried out at a temperature between 180 and 380 °C, a total pressure of between 10 to 250 bar and preferably above 100 bar and more preferably between 120 and 250 bar. The WHSV (Weight hourly space velocity) ranges from 0.3 to 2 kg of oil per litre of catalyst per hour (kg/l.h).

The hydrogenation catalyst is suitably a supported catalyst comprising a dispersed Group VIII metal. Possible Group VIII metals are cobalt, nickel, palladium and platinum. Cobalt and nickel containing catalysts may also comprise a Group VIB metal, suitably molybdenum and tungsten. Suitable carrier or support materials are low acidity amorphous refractory oxides. Examples of suitable amorphous refractory oxides include inorganic oxides, such as alumina, silica, titania, zirconia, boria, silica-alumina, fluorided alumina, fluorided silica-alumina and mixtures of two or more of these.

Examples of suitable hydrogenation catalysts are nickel-molybdenum containing catalyst such as KF-847 and KF-8010 (AKZO Nobel) M-8-24 and M-8-25 (BASF), and C-424, DN-190, HDS-3 and HDS-4 (Criterion); nickel-tungsten containing catalysts such as NI-4342 and NI-4352 (Engelhard) and C-454 (Criterion); cobalt-molybdenum containing catalysts such as KF-330 (AKZO-Nobel), HDS-22 (Criterion) and HPC-601 (Engelhard). Preferably platinum containing and more preferably platinum and palladium containing catalysts are used. Preferred supports for these palladium and/or platinum containing catalysts are amorphous silica-alumina. Examples of suitable silica-alumina carriers are disclosed in WO-A-94/10263. A preferred catalyst comprises an alloy of palladium and platinum preferably supported on an amorphous silica-alumina carrier of which the commercially available catalyst C-624 of Criterion Catalyst Company (Houston, TX) is an example.

The white oil as obtained by the process as described above, including the optional hydrogenation step, may also be contacted with an adsorbent to further increase the colour properties. In this respect reference is made to WO 2004/000975. Examples of suitable heterogeneous adsorbents are active carbon, zeolites, for example natural faujasite, or synthetic materials such as ferrierite, ZSM-5, faujasite, mordenite, metal oxides such as silica powder, silica gel, aluminium oxyde and various clays, for example Attapulgus clay (hydrous magnesium-aluminium silicate), Porocel clay (hydrated aluminium oxide). A preferred adsorbent is activated carbon.

In general, activated carbon is a microcrystalline, nongraphitic form of carbon, which has been processed to develop internal porosity due to which it has a large surface area. Activated carbons which have been found particularly suitable, are those having a surface area (N₂, BET method) in the range from 500 to 1500 m²/g, preferably from 900 to 1400 m²/g, and a Hg pore volume in the range from 0.1 to 1.0 ml/g, preferably from 0.2 to 0.8 ml/g. With the expression "Hg pore volume" is meant the pore volume as determined by mercury porosimetry. Very good results have been obtained with activated carbons which additionally have a micropore size distribution of 0.2 to 2 nm with an average of 0.5 to 1 nm, a pore size distribution (Hg porosimetry) in the range from 1 to 10,000 nm, preferably from 1 to 5,000 nm, and a total pore volume as determined by nitrogen porosimetry in the range from 0.4 to 1.5 ml/g, preferably from 0.5 to 1.3 ml/g. Other preferred physical characteristics include an apparent bulk density of from 0.25 to 0.55 g/ml, a particle size of from 0.4 to 3.5 nm, preferably 0.5 to 1.5 nm, and a bulk crushing strength of at least 0.8 MPa, preferably at least 1.0 MPa. Examples of suitable commercially available activated carbons include Chemviron type, Chemviron F-400 (FILTRASORB 400), DARCO GCL 8*30 and DARCO GCL 12*40 (FILTRASORB and DARCO are trade marks).

The activated carbon used in the process according to the present invention is preferably dry activated carbon. This means that the water content of the activated carbon should be less than 2% by weight, preferably less than 1% by weight and more preferably less than 0.5% by weight, based on total weight of activated carbon. This usually means that the activated carbon has to be dried first before application in the process of the present invention. Drying can be either be performed ex situ or in situ via conventional drying procedures known in the art. Examples of suitable drying procedures are those wherein activated carbon is dried at a temperature in the range of from 100 to 500 °C for 1 to 48 hours in a nitrogen atmosphere. In case of applying a fixed bed of activated carbon, in situ drying the activated carbon, i.e. drying after the activated carbon has been packed into a bed, is preferred.

The conditions (temperature, pressure, space velocity) under which the bottom product is contacted with the activated carbon may vary within broad ranges in order to still attain the desired white oil quality. Temperatures in the range of from 20 to 300 °C, preferably 30 to 200 °C, more preferably 40 to 150 °C, have been found to be suitable in this respect. The operating pressure of the process according to the present invention is not particularly critical and may be in the range of from 1 to 200 bar, preferably 1 to 100 bar, most preferably 1 to 20 bar. A suitable weight hourly space velocity has been found to be in the range of from 0.2 to 25 kg/l/hr, preferably from 0.5 to 10 kg/l/hr and more preferably from 1 to 5 kg/l/hr.

Blending step (e) of the subject process may be performed by any suitable method. Step (e) is preferably performed by incorporating the white oil with the vinyl aromatic resin by mixing together the heatplastified resin and the oil by a rolling, extruding, or milling operation such as by milling a mixture of the resin and the oil on heated compounding rolls until a homogeneous composition is obtained. In an alternative embodiment of the above process, the white oil is added to the polymerizable compound or compounds used in making the vinyl aromatic resin prior to polymerizing. The polymerization is then preferably carried out in bulk, i.e. in the substantial absence of other solvents, and at temperatures in the range of from 50 to 200 °C.

In a further aspect, the present invention relates to the use of a Fischer-Tropsch derived white oil as described in the composition according to the present invention as a plasticizer for polystyrene compositions or styrene copolymers.

In an even further aspect the present invention relates to the use of a Fischer-Tropsch derived white oil having a kinematic viscosity at 100 °C of less than 7 mm²/s according to ISO 3014, preferably less than 5.5 mm²/s as a plasticizer for polystyrene compositions or styrene copolymers in food contact applications, in particular food processing or food packaging.

In an even further aspect the present invention relates to the use of a Fischer-Tropsch derived white oil having a kinematic viscosity at 100 °C of less than 7 mm²/s according to ISO 3014, as a diluent or non-reactive solvent for the bulk (co)polymerisation of vinylaromatic monomers, such as styrene monomers.

The present invention will be further illustrated by the following non-limiting examples.

### Example 1

Four polystyrene compositions were prepared using 97 wt% of styrene (technical grade) and 3 wt% of 4 Fischer-Tropsch derived white oils FT1-4, respectively.

The Fischer-Tropsch derived white oils FT1-4 were generally prepared according to the process described in Example 1 of EP-A-1 382 639, by adjusting the amount and cut point at which the fraction is separated from the distillate fraction. The properties of the Fischer-Tropsch derived white oils are indicated in Table 1 below. FT1-3 are white oils according to the present invention and FT4 is included as a comparative example.

**Table 1. Properties of Fischer-Tropsch derived white oils.**

| | FT1 | FT2 | FT3 | FT4 (comparative) |
|---|---|---|---|---|
| Density @ 15 °C (DIN 51757, kg/m³) | 818.5 | 821.4 | 823.2 | 831.5 |
| Flash point (ISO 2592, °C) | 232 | 240 | 241 | 276 |
| Pour point (DIN ISO 3016, °C) | -48 | -54 | -20 | -39 |
| Kinematic viscosity @ 40 °C (ISO 3014, mm²/s) | 20.1 | 25.1 | 24.5 | 56.6 |
| Kinematic viscosity @ 100 °C (ISO 3014, mm²/s) | 4.3 | 5.1 | 5.5 | 9.1 |
| Viscosity index (DIN ISO 2909) | 122 | 132 | 173 | 139 |
| Content of hydrocarbons with carbon number less than 25 (ASTM D 2887, %) | < 1.0 | < 0.5 | < 0.5 | < 0.5 |
| Boiling point at 5% distillation, (ASTM D 2887, °C) | 409 | 412 | 402 | 486 |

Each composition of styrene and white oil was mixed thoroughly and about 30 ml of the resulting mixture was transferred to a 50 ml glass tube with 3 cm outer diameter and then locked with a flared cap. The mixtures were polymerized at 140 °C for 24 hours. The samples were then stored for 30 minutes at 23 °C. The polymer compositions were obtained by removal of the glass material (by cautious hammering on the sample wrapped in a towel). Then, the compatibility of the compositions was evaluated by visual rating (clear/hazy/turbid). The results are given in Table 4. The experiments were repeated using 3.5, 4.0 and 4.5 wt% white oil, respectively. The results are also given in Table 2.

**Table 2. Visual rating.**

| | FT1 | FT2 | FT 3 | FT4 (comparative) |
|---|---|---|---|---|
| 3.0% white oil | Clear | Clear | Clear | Turbid |
| 3.5% white oil | Clear | Clear | Hazy | Turbid |
| 4.0% white oil | Clear | Hazy | Turbid | Turbid |
| 4.5% white oil | Turbid | Turbid | Turbid | Turbid |

As shown by the results of Table 4, the compositions according to the present invention showed improved fogging behaviour (i.e. the polystyrene compositions were less inclined to turn turbid). While the comparative example (FT4) showed a relatively poor compatibility with polystyrene at all white oil contents of 3.0% and above, all white oils according to the present invention showed an advantageous compatibility with polystyrene at 3.0%. FT1 showed even a good compatibility at a white oil content of 4.0%.

## Claims

1. Polystyrene composition or styrene copolymer composition comprising a Fischer-Tropsch derived white oil, wherein the Fischer-Tropsch derived white oil has a kinematic viscosity at 100 °C of in between more than 2 mm²/s and less than 7 mm²/s, as determined according to ISO 3014 and wherein the composition comprises from 1 to 3 wt% of the Fischer-Tropsch derived white oil.

2. Composition according to claim 1, wherein the Fischer-Tropsch derived white oil has a kinematic viscosity at 100 °C of less than 6.5 mm²/s.

3. Composition according to claim 1 or 2, wherein the Fischer-Tropsch derived white oil has a kinematic viscosity at 100 °C of more than 2.5 mm²/s.

4. Composition according to any one of claims 1 to 3, wherein the Fischer-Tropsch derived white oil has a content of mineral hydrocarbons with carbon numbers less than 25 of not more than 5% (w/w) and a 5 wt% recovery boiling point of above 391 °C according to ASTM D 2887.

5. Composition according to claim 4, wherein the Fischer-Tropsch derived white oil has a content of mineral hydrocarbons with carbon numbers less than 25 of not more than 3% (w/w).

6. Composition according to claim 4 or 5, wherein the Fischer-Tropsch derived white oil has a 5 wt% recovery boiling point of above 400 °C.

7. Composition according to one or more of the preceding claims, wherein the Fischer-Tropsch derived white oil has a kinematic viscosity at 40 °C of less than 55, as determined according to ISO 3014.

8. Composition according to one or more of the preceding claims, wherein the Fischer-Tropsch derived white oil has a flash point below 270 °C, as determined according to ISO 2592.

9. Composition according to one or more of the preceding claims, wherein the Fischer-Tropsch derived white oil has a flash point of above 220 °C, as determined according to ISO 2592.

10. Process to prepare a composition according to one or more of the preceding claims, comprising preparing a Fischer-Tropsch derived white oil by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to the white oil precursor fraction obtained in step (b); and
(d) isolating the white oil by distilling the product of step (c), and
(e) blending the white oil obtained in step (d) with the polystyrene or styrene copolymer.

11. Process to prepare a composition according to one or more of the preceding claims 1-9, comprising preparing a Fischer-Tropsch derived white oil by:
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms;
(b) separating the product of step (a) into one or more lower boiling distillate fraction(s) and a higher boiling white oil precursor fraction;
(c) performing a pour point reducing step to the white oil precursor fraction obtained in step (b); and
(d) isolating the white oil by distilling the product of step (c), and
(e) polymerising a polymerizable compound or compounds used in making the polystyrene or styrene copolymer in the white oil obtained in step (d).

12. Use of a Fischer-Tropsch derived white oil as described in the composition according to one or more of the preceding claims 1-9 as a plasticizer for a polystyrene or styrene copolymers composition.

13. Use of a Fischer-Tropsch derived white oil having a kinematic viscosity at 100 °C of in between more than 2 mm²/s and less than 7 mm²/s, as determined according to ISO 3014, as a plasticizer for polystyrene compositions or styrene copolymers in food contact applications.

14. Use of a Fischer-Tropsch derived white oil having a kinematic viscosity at 100 °C of less of in between more than 2 mm²/s and less than 7 mm²/s according to ISO 3014, as a diluent or non-reactive solvent for the bulk (co)polymerisation of vinylaromatic monomers.

## Patentansprüche

1. Polystyrol-Zusammensetzung oder Styrol-Copolymer-Zusammensetzung, umfassend ein aus Fischer-Tropsch stammendes Weißöl, wobei das aus Fischer-Tropsch stammende Weißöl eine kinematische Viskosität bei 100°C von mehr als 2 mm²/s und weniger als 7 mm²/s aufweist, bestimmt gemäß ISO 3014, und wobei die Zusammensetzung 1 bis 3 Gew.-% des aus Fischer-Tropsch stammenden Weißöls umfasst.

2. Zusammensetzung nach Anspruch 1, wobei das aus Fischer-Tropsch stammende Weißöl eine kinematische Viskosität bei 100°C von weniger als 6,5 mm²/s aufweist.

3. Zusammensetzung nach Anspruch 1 oder 2, wobei das aus Fischer-Tropsch stammende Weißöl eine kinematische Viskosität bei 100°C von mehr als 2,5 mm²/s aufweist.

4. Zusammensetzung nach einem der Ansprüche 1 bis 3, wobei das aus Fischer-Tropsch stammende Weißöl einen Gehalt an mineralischen Kohlenwasserstoffen mit Kohlenstoffzahlen von weniger als 25 von nicht mehr als 5% (Gewicht/Gewicht) aufweist und einen 5 Gew.-% Rückgewinnungssiedepunkt von über 391°C nach ASTM D 2887 besitzt.

5. Zusammensetzung nach Anspruch 4, wobei das aus Fischer-Tropsch stammende Weißöl einen Gehalt an mineralischen Kohlenwasserstoffen mit Kohlenstoffzahlen von weniger als 25 von nicht mehr als 3% (Gewicht/Gewicht) aufweist.

6. Zusammensetzung nach Anspruch 4 oder 5, wobei das aus Fischer-Tropsch stammende Weißöl einen 5 Gew.-% Rückgewinnungssiedepunkt von über 400°C besitzt.

7. Zusammensetzung nach einem oder mehreren der vorhergehenden Ansprüche, wobei das aus Fischer-Tropsch stammende Weißöl eine kinematische Viskosität bei 40°C von weniger als 55, bestimmt gemäß ISO 3014, aufweist.

8. Zusammensetzung nach einem oder mehreren der vorhergehenden Ansprüche, wobei das aus Fischer-Tropsch stammende Weißöl einen Flammpunkt unter 270°C, bestimmt gemäß ISO 2592, aufweist.

9. Zusammensetzung nach einem oder mehreren der vorhergehenden Ansprüche, wobei das aus Fischer-Tropsch stammende Weißöl einen Flammpunkt über 220°C, bestimmt gemäß ISO 2592, aufweist.

10. Verfahren zur Herstellung einer Zusammensetzung nach einem oder mehreren der vorhergehenden Ansprüche, umfassend die Herstellung eines aus Fischer-Tropsch stammenden Weißöls durch:
(a) Hydrocracken/Hydroisomerisieren eines aus Fischer-Tropsch stammenden Einsatzmaterials, wobei das Gewichtsverhältnis an Verbindungen mit mindestens 60 oder mehr Kohlenstoffatomen zu Verbindungen mit mindestens 30 Kohlenstoffatomen in dem aus Fischer-Tropsch stammenden Einsatzmaterial mindestens 0,2 beträgt und wobei mindestens 30 Gew.-% der Verbindungen in dem aus Fischer-Tropsch stammenden Einsatzmaterial mindestens 30 Kohlenstoffatome aufweisen;
(b) Auftrennen des Produkts aus Schritt (a) in eine oder mehrere niedrig siedende Destillatfraktion(en) und in eine höher siedende Weißölvorläuferfraktion;
(c) Durchführen eines Schrittes zur Verringerung des Pourpoints an der im Schritt (b) erhaltenen Weißölvorläuferfraktion; und
(d) Isolieren des Weißöls durch Destillieren des Produktes aus Schritt (c), und
(e) Mischen des im Schritt (d) erhaltenen Weißöls mit dem Polystyrol oder Styrol-Copolymer.

11. Verfahren zur Herstellung einer Zusammensetzung nach einem oder mehreren der vorhergehenden Ansprüche 1-9, umfassend die Herstellung eines aus Fischer-Tropsch stammenden Weißöls durch:
(a) Hydrocracken/Hydroisomerisieren eines aus Fischer-Tropsch stammenden Einsatzmaterials, wobei das Gewichtsverhältnis an Verbindungen mit mindestens 60 oder mehr Kohlenstoffatomen zu Verbindungen mit mindestens 30 Kohlenstoffatomen in dem aus Fischer-Tropsch stammenden Einsatzmaterial mindestens 0,2 beträgt und wobei mindestens 30 Gew.-% der Verbindungen in dem aus Fischer-Tropsch stammenden Einsatzmaterial mindestens 30 Kohlenstoffatome aufweisen;
(b) Auftrennen des Produkts aus Schritt (a) in eine oder mehrere niedrig siedende Destillatfraktion(en) und in eine höher siedende Weißölvorläuferfraktion;
(c) Durchführen eines Schrittes zur Verringerung des Pourpoints an der im Schritt (b) erhaltenen Weißölvorläuferfraktion; und
(d) Isolieren des Weißöls durch Destillieren des Produktes aus Schritt (c), und
(e) Polymerisieren einer polymerisierbaren Verbindung oder Verbindungen, die beim Herstellen des Polystyrols oder Styrol-Copolymers in dem im Schritt (d) erhaltenen Weißöl verwendet werden.

12. Verwendung eines aus Fischer-Tropsch stammenden Weißöls, wie beschrieben in der Zusammensetzung nach einem oder mehreren der vorhergehenden Ansprüche 1-9, als Weichmacher für eine Polystyrol- oder Styrol-Copolymer-Zusammensetzung.

13. Verwendung eines aus Fischer-Tropsch stammenden Weißöls mit einer kinematischen Viskosität bei 100°C von mehr als 2 mm²/s und weniger als 7 mm²/s, bestimmt gemäß ISO 3014, als Weichmacher für Polystyrol-Zusammensetzungen oder Styrol-Copolymere in Anwendungen mit Lebensmittelkontakt.

14. Verwendung eines aus Fischer-Tropsch stammenden Weißöls mit einer kinematischen Viskosität bei 100°C von mehr als 2 mm²/s und weniger als 7 mm²/s, bestimmt gemäß ISO 3014, als Verdünnungsmittel oder nichtreaktives Lösungsmittel für die Block(co)polymerisation von vinylaromatischen Monomeren.

## Revendications

1. Composition de polystyrène ou composition de copolymère de styrène comprenant une huile blanche obtenue par procédé Fischer-Tropsch, dans laquelle l'huile blanche obtenue par procédé Fischer-Tropsch a une viscosité cinématique à 100°C comprise entre plus de 2 mm²/s et moins de 7 mm²/s, comme déterminé selon la norme ISO 3014 et dans laquelle la composition comprend de 1 à 3% en poids de l'huile blanche obtenue par procédé Fischer-Tropsch.

2. Composition selon la revendication 1, dans laquelle l'huile blanche obtenue par procédé Fischer-Tropsch a une viscosité cinématique à 100°C inférieure à 6,5 mm²/s.

3. Composition selon la revendication 1 ou 2, dans laquelle l'huile blanche obtenue par procédé Fischer-Tropsch a une viscosité cinématique à 100°C supérieure à 2,5 mm²/s.

4. Composition selon l'une quelconque des revendications 1 à 3, dans laquelle l'huile blanche obtenue par procédé Fischer-Tropsch a une teneur en hydrocarbures minéraux ayant des nombres de carbone inférieurs à 25 ne dépassant pas 5% (P/P) et un point d'ébullition de récupération de 5% en poids supérieur à 391°C selon l'ASTM D 2887.

5. Composition selon la revendication 4, dans laquelle dans laquelle l'huile blanche obtenue par procédé Fischer-Tropsch a une teneur en hydrocarbures minéraux ayant des nombres de carbone inférieurs à 25 ne dépassant pas 3% (P/P).

6. Composition selon la revendication 4 ou 5, dans laquelle l'huile blanche obtenue par procédé Fischer-Tropsch a un point d'ébullition de récupération de 5% en poids supérieur à 400°C.

7. Composition selon une ou plusieurs des revendications précédentes, dans laquelle l'huile blanche obtenue par procédé Fischer-Tropsch a une viscosité cinématique à 40°C inférieure à 55, comme déterminé selon la norme ISO 3014.

8. Composition selon une ou plusieurs des revendications précédentes, dans laquelle l'huile blanche obtenue par procédé Fischer-Tropsch a un point éclair en dessous de 270°C, comme déterminé selon la norme ISO 2592.

9. Composition selon une ou plusieurs des revendications précédentes, dans laquelle l'huile blanche obtenue par procédé Fischer-Tropsch a un point éclair au-dessus de 220°C, comme déterminé selon la norme ISO 2592.

10. Procédé pour préparer une composition selon une ou plusieurs des revendications précédentes, comprenant la préparation d'une huile blanche obtenue par procédé Fischer-Tropsch par :
(a) hydrocraquage/hydroisomérisation d'une charge d'alimentation obtenue par procédé Fischer-Tropsch, dans lequel le rapport en poids des composés ayant au moins 60 atomes de carbone ou plus et des composés ayant au moins 30 atomes de carbone dans la charge d'alimentation obtenue par procédé Fischer-Tropsch est au moins de 0,2 et dans lequel au moins 30% en poids des composés dans la charge d'alimentation obtenue par procédé Fischer-Tropsch ont au moins 30 atomes de carbone ;
(b) séparation du produit de l'étape (a) en une ou plusieurs fraction(s) de distillat à point d'ébullition plus bas et une fraction de précurseur d'huile blanche à point d'ébullition plus élevé ;
(c) exécution d'une étape de réduction du point d'écoulement sur la fraction de précurseur d'huile blanche obtenue dans l'étape (b) ; et
(d) isolation de l'huile blanche par distillation du produit de l'étape (c), et
(e) mélange de l'huile blanche obtenue dans l'étape (d) avec le polystyrène ou le copolymère de styrène.

11. Procédé pour préparer une composition selon une ou plusieurs des revendications 1 à 9 précédentes, comprenant la préparation d'une huile blanche obtenue par procédé Fischer-Tropsch par :
a) hydrocraquage/hydroisomérisation d'une charge d'alimentation obtenue par procédé Fischer-Tropsch, dans lequel le rapport en poids des composés ayant au moins 60 atomes de carbone ou plus et des composés ayant au moins 30 atomes de carbone dans la charge d'alimentation obtenue par procédé Fischer-Tropsch est au moins de 0,2 et dans lequel au moins 30% en poids des composés dans la charge d'alimentation obtenue par procédé Fischer-Tropsch ont au moins 30 atomes de carbone ;
(b) séparation du produit de l'étape (a) en une ou plusieurs fraction(s) de distillat à point d'ébullition plus bas et une fraction de précurseur d'huile blanche à point d'ébullition plus élevé ;
(c) exécution d'une étape de réduction du point d'écoulement sur la fraction de précurseur d'huile blanche obtenue dans l'étape (b) ; et
(d) isolation de l'huile blanche par distillation du produit de l'étape (c), et
(e) polymérisation d'un composé ou de composés polymérisable(s) utilisé(s) dans la fabrication du polystyrène ou du copolymère styrène dans l'huile blanche obtenue à l'étape (d).

12. Utilisation d'une huile blanche obtenue par procédé Fischer-Tropsch telle que décrite dans la composition selon une ou plusieurs des revendications précédentes 1 à 9 en tant que plastifiant pour une composition de polystyrène ou de copolymères de styrène.

13. Utilisation d'une huile blanche obtenue par procédé Fischer-Tropsch ayant une viscosité cinématique à 100°C comprise entre plus de 2 mm²/s et moins de 7 mm²/s, comme déterminé selon la norme ISO 3014, en tant que plastifiant pour des compositions de polystyrène ou de copolymères de styrène dans des applications en contact avec des aliments.

14. Utilisation d'une huile blanche obtenue par procédé Fischer-Tropsch ayant une viscosité cinématique à 100°C inférieure à une valeur comprise entre plus de 2 mm²/s et moins de 7 mm²/ selon la norme ISO 3014, en tant que diluant ou solvant non réactif pour la (co)polymérisation en masse de monomères vinylaromatiques.
